# EUROPÄISCHE PATENTSCHRIFT

(11) **EP 1 329 481 B1**
(45) Veröffentlichungstag und Bekanntmachung des Hinweises auf die Patenterteilung: **28.06.2006**
(21) Anmeldenummer: 02025903.2
(22) Anmeldetag: 20.11.2002
(51) Int. Cl.: C08L 77/06, C08L 77/00

(54) **Formmasse auf Basis von Polyetheramiden**
Moulding composition based on polyetheramide
Masse à mouler à base de polyétheramide

(30) Priorität: 19.01.2002 DE 10201903
(43) Veröffentlichungstag der Anmeldung: 23.07.2003
(73) Patentinhaber: Degussa AG, 40474 Düsseldorf (DE)
(72) Erfinder: Baumann, Franz-Erich, Dr., 48249 Dülmen (DE); Himmelmann, Martin, 45721 Haltern (DE); Bartz, Wilfried, Dr., 45770 Marl (DE); Farges, Olivier, 45768 Marl (DE)

(56) Entgegenhaltungen:
- EP-A- 0 476 963
- EP-A- 0 842 969
- US-A- 5 869 414

## Beschreibung

Gegenstand der Anmeldung sind Polyetheramidformmassen mit hervorragender Wärmeform-und Hydrolysebeständigkeit, die sich zur Extrusion flexibler Rohre sowie für die Herstellung blasgeformter flexibler Artikel eignen.

Weichgemachte teilkristalline Polyamidformmassen, insbesondere auf der Basis von PA11 oder PA12, werden seit langem zu Rohren für die Verwendung im Automobilbau extrudiert, da sie hervorragende mechanische und chemische Beständigkeit aufweisen. Bei den in neuerer Zeit zunehmend geforderten hohen Einsatztemperaturen unter der Motorhaube zeigen derartige Formteile jedoch wegen der Flüchtigkeit der verwendeten externen Weichmacher nach kurzer Einsatzdauer Versteifung; daneben neigen sie bei Druckbelastung unter den neuerdings geforderten erhöhten Einsatztemperaturen von 110 bis 150 °C zur irreversiblen Deformation. Zwar können diese Nachteile durch Einsatz von Formmassen auf Basis höherschmelzender Polyetheresteramide, wie sie beispielsweise in der EP-A-0 095 893 beschrieben sind, vermieden werden, jedoch eignet sich diese Polyamid-Elastomerklasse nicht zur Herstellung brauchbarer Rohre für die vorgenannte Einsatzzwecke, da entsprechende Formmassen bei der ebenfalls für diesen Anwendungszweck geforderten Hydrolysebeständigkeit bei weitem nicht die Beständigkeit klassischer Polyamidformmassen aufweisen und bereits nach wenigen Wochen versagen.

Die Aufgabe bestand daher darin, hydrolysebeständige Formmassen mit hoher Wärmeformbeständigkeit herzustellen, die eine hohe Schmelzeviskosität aufweisen und sich daher gut extrudieren bzw. blasformen lassen. Die daraus hergestellten Formteile sollten ohne Verwendung externer Weichmacher eine ausreichende, dauerhafte Flexibilität aufweisen.

Diese Aufgabe wurde durch eine Formmasse gelöst, die folgende Komponenten enthält:
I. 99,9 bis 95 Gew.-Teile eines Polyetheramids auf Basis eines linearen aliphatischen Diamins mit 6 bis 12 C-Atomen, einer linearen aliphatischen oder aromatischen Dicarbonsäure mit 6 bis 12 C-Atomen und eines Polyetherdiamins mit wenigstens 3 C-Atomen pro Ethersauerstoff und primären Aminogruppen an den Kettenenden,
II. 0,1 bis 5 Gew.-Teile eines nachfolgend näher beschriebenen Copolymeren, wobei die Summe der Gew.-Teile von I. und II. 100 ergibt,
III. 0 bis 50 Gew.-%, bevorzugt 0 bis 30 Gew.-%, bezogen auf die Formmasse, an weiteren Polymeren sowie
IV. 0 bis 10 Gew.-%, bezogen auf die Formmasse, an üblichen Zusatzstoffen.

Polyetheramide sind prinzipiell z. B. aus der DE-OS 30 06 961 bekannt; die dort näher beschriebenen Polyetheramide auf der Basis von Caprolactam oder Laurinlactam kommen jedoch als Komponente I nicht infrage, da sie einerseits zu niedrige Schmelztemperaturen, andererseits zu niedrige Schmelzeviskositäten aufweisen.

Die erfindungsgemäß als Komponente I einzusetzenden Polyetheramide besitzen eine Schmelztemperatur Tₘ nach ISO 11357 von bevorzugt mindestens 160 °C und besonders bevorzugt von mindestens 175 °C, eine relative Lösungsviskosität ηᵣₑₗ bevorzugt von mindestens 1,80 und besonders bevorzugt mindestens 1,85, gemessen in einer 0,5 gew.-%igen Lösung in m-Kresol bei 23 °C gemäß ISO 307, sowie eine Ruhe-Scherviskosität bei 220 °C bevorzugt von mindestens 500 Pas und besonders bevorzugt mindestens 800 Pas, gemessen in einem mechanischen Spektrometer (Kegel-Platte) nach ASTM D 4440. Die daraus hergestellte erfindungsgemäße Formmasse sollte nach Möglichkeit in der Ruhe-Scherviskosität, auf die gleiche Weise nach ASTM D 4440 gemessen, über 2000 Pas und insbesondere über 5000 Pas bei 220 °C liegen, da sonst eine stabile maßhaltige Extrusion zu den gewünschten Rohren oder anderen Formteilen nicht oder nur in einem für eine wirtschaftliche Fertigung zu engen Temperaturfenster möglich ist.

Die Einarbeitung des Copolymeren der Komponente II führt dann ohne Probleme zum erwünschten zusätzlichen Schmelzeviskositätsaufbau, wenn die vorstehend genannten Schmelze- oder Lösungsviskositäten der Polyetheramide erreicht oder überschritten werden.

Bei der Herstellung des Polyetheramids werden als Diamin beispielsweise 1.6-Hexamethylendiamin, 1.8-Octamethylendiamin, 1.9-Nonamethylendiamin, 1.10-Decamethylendiamin und 1.12-Dodecamethylendiamin eingesetzt. Als Dicarbonsäure setzt man beispielsweise Adipinsäure, Korksäure, Azelainsäure, Sebacinsäure, 1.12-Dodecandisäure, Terephthalsäure oder 2.6-Naphthalindicarbonsäure ein. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN® D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet. Generell ist wünschenswert, dass bei den einzusetzenden Polyetherdiaminen ein Difunktionalitätsgrad, ausgedrückt durch den molaren Anteil acetylierbarer Amino- und Hydroxylendgruppen, von mindestens 95 % und bevorzugt von mindestens 98 % vorliegt; dabei ist ein z. B. acidimetrisch bestimmbarer Diamingehalt von mindestens 90 % und bevorzugt mindestens 95 % erwünscht. Die weitere Forderung nach einer annähernden Äquivalenz der eingesetzten Dicarbonsäure mit der Summe aus Diamin und Polyetherdiamin ist angesichts der notwendigerweise zu erreichenden hohen Molmassen trivial; in der Praxis arbeitet man mit Amino : Carboxyl-Molverhältnissen von 0,98 : 1 bis 1,02: 1.

Im Hinblick auf den gewünschten Molekulargewichtsaufbau müssen Nebenreaktionen, die die Endgruppen schädigen oder die Ketten spalten, weitestgehend unterdrückt werden. Der Temperaturbereich für die Schmelzepolykondensation ist daher in der Praxis auf 220 bis etwa 245 °C eingeschränkt, wobei die Untergrenze aus den Schmelztemperaturen der zugrundeliegenden Polyamide und die Obergrenze aus der beginnenden thermischen Zersetzung der Polyetherdiamine resultiert.

Für eine eventuell durchzuführende Festphasen-Nachkondensation müssen überraschend drastische Bedingungen gewählt werden: Während für aliphatische Polyamide wie PA612, PA1010, PA1012 oder PA1212 erfahrungsgemäß Temperaturen von 155 bis 165 °C ausreichen, sind für die davon abgeleiteten erfindungsgemäß eingesetzten Polyetheramide Nachkondensationstemperaturen von 165 bis 185 °C erforderlich. Die Festphasennachkondensations-Temperatur sollte zur Vermeidung von Zusammenbackungen nicht höher als 10 K unterhalb des Kristallitschmelzpunktes Tₘ liegen. Es versteht sich für den Fachmann von selbst, dass entweder im Hochvakuum oder unter einem Inertgasstrom nachkondensiert wird. Ein möglicher Grund für die geringere Nachkondensationsaktivität der Polyetheramide kann in einer gegenüber üblichen, von aliphatischen Diaminen herrührenden Aminoendgruppen geringeren Reaktivität ihrer teilweise sterisch gehinderten Aminoendgruppen liegen.

Das Copolymere enthält die nachstehenden Grundbausteine:
a) 0 bis 85 Gew.-%,
   bevorzugt 0,1 bis 80 Gew.-% 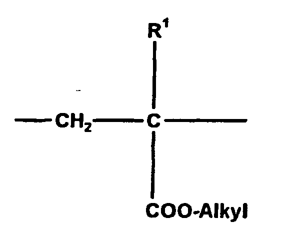
b) 0 bis 80 Gew.-%,
   bevorzugt 0,1 bis 70 Gew.-% 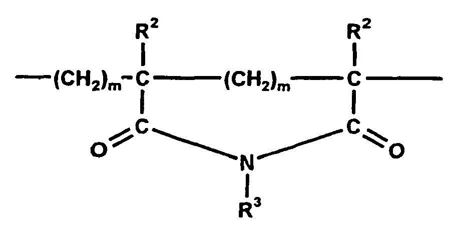
c) 0 bis 15 Gew.-% 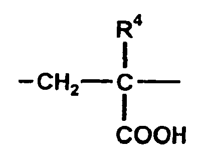
d) 0,8 bis 20 Gew.-%, bevorzugt 1,2 bis 16 Gew.-%, eines Grundbausteins, ausgewählt aus 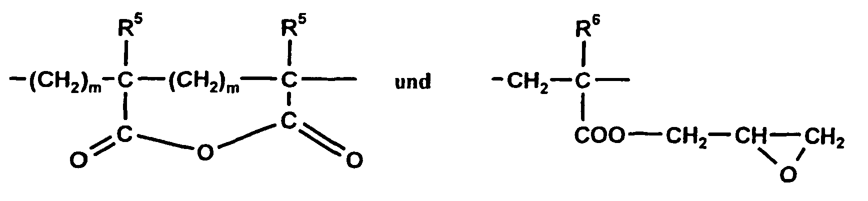
e) 0 bis 95 Gew.-%,
   bevorzugt 0,1 bis 85 Gew.-%

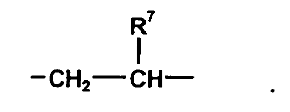

In den genannten Formeln bedeuten
- Alkyl =: Methyl, Ethyl, Propyl, Butyl, Pentyl oder Hexyl,
- R¹ bis R⁷ =: H oder CₙH₂ₙ₊₁ mit n = 1 bis 6 oder Phenyl und
- m: = 0 oder 1,
wobei die Reste R¹ bis R⁷ gleich oder verschieden sein können.

Die Copolymeren werden auf bekannte Weise durch Polymerisation der entsprechenden Monomeren hergestellt. Im Falle m = 0 und R⁴ = H leitet sich der Grundbaustein d) beispielsweise von Maleinsäureanhydrid her, während im Falle m = 1 der Grundbaustein d) durch Verseifung zweier benachbarter Einheiten der Komponente a) und anschließenden Ringschluss entsteht. Analog leitet sich der Grundbaustein b) im Falle m = 0 und R² = H von einem Maleinimid her, beispielsweise N-Phenylmaleinimid oder N-Methylmaleinimid, während im Falle m = 1 der Grundbaustein b) durch Aminolyse einer Einheit des Grundbausteins a) und anschließenden Ringschluss durch Imidisierung mit einer benachbarten Einheit des Grundbausteins a) entsteht.

In einer möglichen Ausführungsform liegt der Grundbaustein b) zu 10 bis 60 Gew.-% und besonders bevorzugt zu 20 bis 50 Gew.-% vor. Derartige Polymere werden im Falle von m = 1 auch als Polyglutarimide bezeichnet. Es handelt sich hierbei um Polyalkylacrylsäureester, bei denen zwei benachbarte Estergruppen zu einem cyclischen Säureimid umgesetzt worden sind. Die Imidbildung wird bevorzugt mit Ammoniak bzw. primären Aminen, wie z. B. Methylamin, durchgeführt. Wegen der Anwesenheit von Wasser bei der Imidbildungsreaktion wird hierbei ein Teil der Grundbausteine a) zu den Grundbausteinen c) und d) verseift. Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f.; H. G. Elias, Makromoleküle, Hüthig und Wepf Verlag Basel-Heidelberg-New York; US 2 146 209; US 4 246 374).

Weitere geeignete Copolymertypen sind beispielsweise auf der Basis von Styrol/Maleinsäureanhydrid, Ethylen/Glycidylmethacrylat, Ethylen/Acrylat/Maleinsäureanhydrid oder Methylmethacrylat/Maleinsäureanhydrid aufgebaut.

Geeignete Polymere der Komponente III sind in erster Linie solche, die mit dem Polyetheramid verträglich sind, insbesondere ein Kautschuk, der funktionelle Gruppen trägt, oder ein Polyamid.

Als geeignete Zusatzstoffe der Komponente IV sind in erster Linie Stabilisatoren, Leitfähigkeitsruß, Flammschutzadditive wie z. B. Melamincyanurat, Pigmente und Verarbeitungshilfsmittel zu nennen. Polymere, die unter die Komponente III fallen, zählen nicht hierzu.

Die Einarbeitung des Copolymeren der Komponente II sowie gegebenenfalls der Zusatzstoffe der Komponenten III und IV erfolgt in der Schmelze unter Scherung, beispielsweise in einem Zweischneckenextruder oder einem Cokneter.

Die erfindungsgemäße Formmasse kann beispielsweise durch Extrusion, konventionelles Blasformen oder 3D-Blasformen, beispielsweise durch Schlauchextrusion in eine geöffnete Formhälfte, 3D-Schlauchmanipulation bzw. 3D-Saugblasformen, durch sequentielles Blasformen zur Herstellung von Hart-Weich-Verbunden oder durch jedes andere Blasformverfahren verarbeitet werden.

Weiterhin kann die Formmasse durch Coextrusion, Coextrusionsblasformen, Coextrusions-3D-Blasformen, Coextrusions-Saugblasformen usw. zu einem Mehrschichtverbund verarbeitet werden.

Darüber hinaus kann die Formmasse im Spritzgießverfahren verarbeitet werden, auch mit Verfahrensvarianten wie GIT (Gasinnendrucktechnik) oder WIT (Wasserinjektionstechnik).

Gemäß den genannten Verfahren können beispielsweise Monorohre oder Mehrschichtrohre hergestellt werden. Diese Rohre können glatt oder in Teilbereichen bzw. vollständig gewellt sein. Darüber hinaus findet die Formmasse Verwendung zur Herstellung von Profilen jeglicher Art, beispielsweise Dichtprofilen, oder Hohlkörpern wie z. B. Behältern.

Die erfindungsgemäß hergestellten Formteile werden beispielsweise im Kraftfahrzeugbau, im Maschinen- und Apparatebau oder in der Medizintechnik eingesetzt, insbesondere als eine Unterdruckleitung etwa für Bremskraftverstärker, eine Luftführungsleitung, ein Druckschlauch, beispielsweise eine Druckluftleitung, eine Steuerleitung, eine Kühlmittelleitung, eine Kraftstoffleitung, eine Entlüftungsleitung, eine Scheibenwaschanlagenleitung, eine Leitung für hydraulische Kupplungssysteme, eine Servolenkungsleitung, eine Leitung für Klimaanlagen von Kraftfahrzeugen, eine Kabel- oder Adernummantelung, eine Leitung für den Bereich Maschinen- und Apparatebau oder in der Medizintechnik oder als spritzgegossenes Teil eines Ölfilters oder eines Kraftstoffilters. Diese Formteile sind ebenfalls Gegenstand der Erfindung.

Die Erfindung ist im Folgenden beispielhaft erläutert.

### Beispiel 1:

Ein 200 l-Rührautoklav wurde mit folgenden Einsatzstoffen beschickt:

| | |
|---|---|
| 26,11 kg | Hexamethylendiamin als 75%ige wässrige Lösung, |
| 52,94 kg | 1.12-Dodecandisäure, |
| 25,55 kg | JEFFAMIN® D400 sowie |
| 100 g | einer 50%igen wässrigen Lösung von Hypophosphoriger Säure. |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 230 °C aufgeheizt und danach 1,5 Stunden im Stickstoffstrom bei dieser Temperatur gehalten. Anschließend wurde innerhalb von 3 Stunden bis auf 28 mbar evakuiert und weitere 3 Stunden bei diesem Vakuum gehalten, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.

Das Produkt wies folgende Kennwerte auf:

| | |
|---|---|
| Kristallitschmelzpunkt Tₘ: | 193 °C |
| Relative Lösungsviskosität ηᵣₑₗ: | 1,91 |
| COOH-Endgruppen: | 21 mmol/kg |
| Aminoendgruppen: | 26 mmol/kg |

Aus dem Verhältnis der eingesetzten Monomeren ergibt sich in diesem Polyetheramid formal ein PA612-Block mit einer mittleren Molmasse von 1083.

50 kg dieses Granulats wurden 24 Stunden bei 175 °C Manteltemperatur unter Stickstoff (250 l/h) in einem 250 l fassenden Taumeltrockner nachkondensiert. Nach dieser Zeit wies das Produkt folgende Kennwerte auf:

| | |
|---|---|
| Kristallitschmelzpunkt Tₘ: | 193 °C |
| Relative Lösungsviskosität ηᵣₑₗ: | 2,06 |
| COOH-Endgruppen: | 14 mmol/kg |
| Aminoendgruppen: | 20 mmol/kg |

### Herstellung der Formmasse:

Die Rezeptur der Formmasse in Gew.-Teilen ist nachfolgend wiedergegeben. Die Einarbeitung der einzelnen Rezepturbestandteile erfolgte auf einem Zweischneckenextruder der Firma Werner & Pfleiderer bei einer Zylindertemperatur von 250 °C.

| | |
|---|---|
| Polyetheramid | 95,4 |
| Ein teilimidisiertes Polymethacrylat der Fa. Röhm GmbH, Darmstadt mit 54,4 Gew.-% | 1,9 |
| Methylmethacrylateinheiten, 33 Gew.-% | |
| Imideinheiten, 2,6 Gew.-& | |
| Methacrylsäureinheiten und 1,2 Gew.-% Anhydrideinheiten | |
| NAUGARD® 445 als Wärmestabilisator | 0,5 |
| CuJ-KJ-Stabilisatorbatch | 1,0 |
| Farbbatch schwarz auf PA612-Basis; Rußkonzentration 20 % | 1,2 |

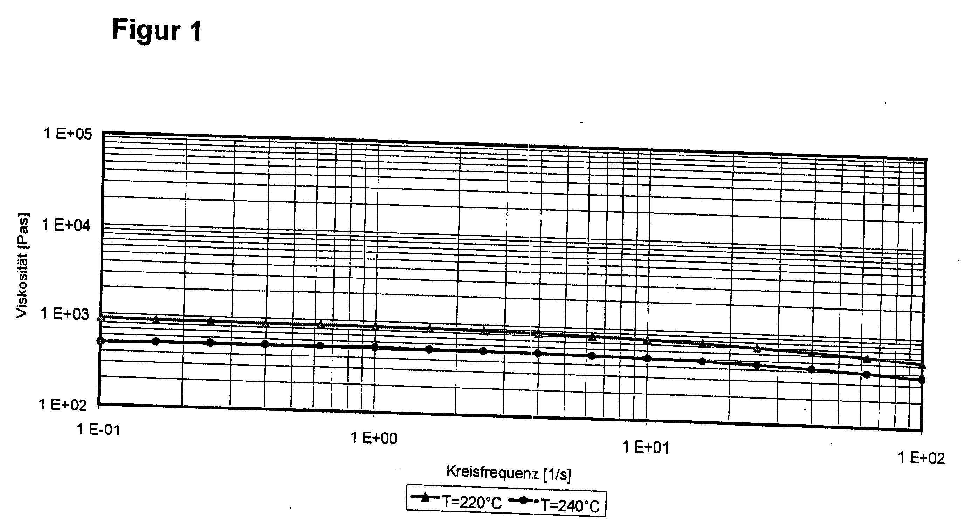

In der Fig. 1 ist die Viskositätskurve des im Beispiel 1 hergestellten Polyetheramids wiedergeben.

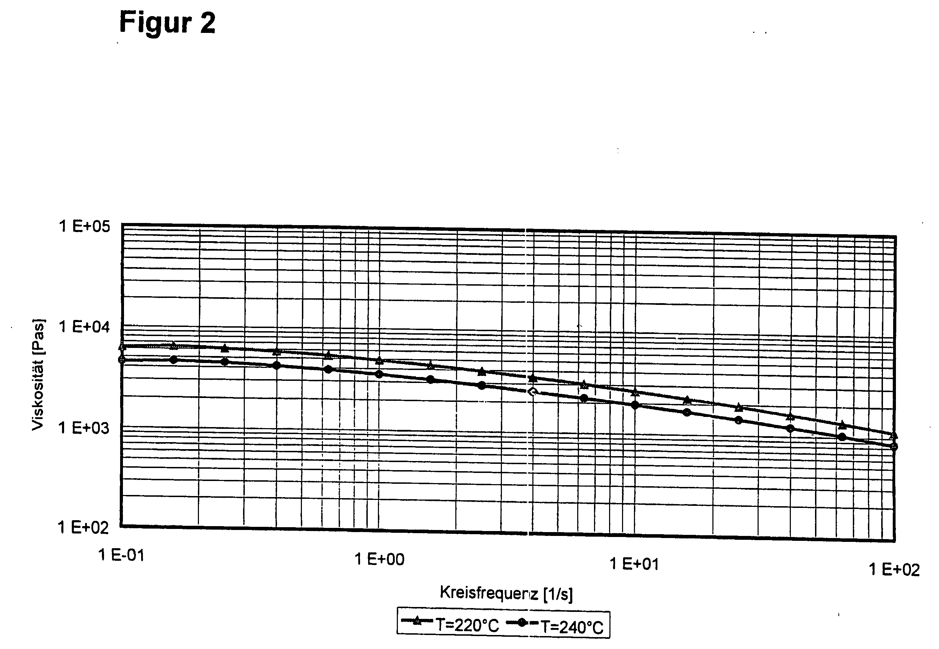

Die Fig. 2 gibt die Viskositätskurve der im Beispiel 1 hergestellten Formmasse wieder.

Diese Viskositätskurven zeigen anschaulich, dass die Einarbeitung eines teilimidisierten Polymethacrylats einen signifikanten Aufbau der Schmelzeviskosität bewirkt. Neben dem Viskositätsniveau wird auch die Strukturviskosität (Steigung der Viskositätskurve) positiv beeinflusst. Beides ist für eine wirtschaftliche und stabile Fertigung von maßhaltigen Extrusionsformteilen wie etwa Rohren Voraussetzung.

Die Formmasse des Beispiels 1 wurde auf einem handelsüblichen Einschneckenextruder mit 3-Zonen-Schnecke bei einer Massetemperatur von ca 220 °C zu einem Rohr mit 12 mm Außendurchmesser und 1,25 mm Wandstärke extrudiert. Die Prüfung der Hydrolysebeständigkeit wurde an diesem Rohr nach zwei Methoden durchgeführt:
a) Klimalagerung bei 80 °C/95 % relative Feuchte sowie
b) Vollkontaktlagerung in Wasser bei 98 °C.

Bei beiden Methoden wurde in einem Zugversuch in Anlehnung an ISO 527 die Änderung der Reißdehnung ermittelt.

Gleichzeitig wurde die Prüfung der Hydrolysebeständigkeit an entsprechenden Rohren durchgeführt, die aus folgenden Materialien bestanden:
- Einer Polyetheresteramid-Formmasse des Standes der Technik, die aus PA612-Blöcken mit mittlerer Molmasse von 1083 sowie aus Polytetrahydrofuranblöcken ausgehend von einem PTHF 650 mit einer mittleren Molmasse von 649 zusammengesetzt ist (ηᵣₑₗ = 1,97) und die gleichen Mengen an NAUGARD® 445, CuJ-KJ-Stabilisatorbatch und Farbbatch enthielt;
- einem handelsüblichen thermoplastischen Polyetherester, der für viele vergleichbare Anwendungen als Stand der Technik anzusehen ist.

Bei der Klimalagerung wurden folgende Ergebnisse erhalten:
- Formmasse aus Beispiel 1: Die Reißdehnung fiel von anfangs 260 % auf 232 % nach 2400 Stunden ab.
- Polyetheresteramid: Die Reißdehnung fiel von anfangs 337 % auf 6 % nach 672 Stunden ab.
- Polyetherester: Die Reißdehnung fiel von anfangs 339 % auf 14 % nach 1344 Stunden ab.

Bei der Vollkontaktlagerung erhielt man folgende Ergebnisse:
- Formmasse aus Beispiel 1: Die Reißdehnung fiel von anfangs 260 % auf 76 % nach 2880 Stunden.
- Polyetheresteramid: Die Reißdehnung fiel von anfangs 337 % auf 0 % nach 336 Stunden.
- Polyetherester: Die Reißdehnung fiel von anfangs 339 % auf 0 % nach 336 Stunden.

## Patentansprüche

1. Formmasse, die folgende Komponenten enthält:
I. 99,9 bis 95 Gew.-Teile eines Polyetheramids auf Basis eines linearen aliphatischen Diamins mit 6 bis 12 C-Atomen, einer linearen aliphatischen oder aromatischen Dicarbonsäure mit 6 bis 12 C-Atomen und eines Polyetherdiamins mit wenigstens 3 C-Atomen pro Ethersauerstoff und primären Aminogruppen an den Kettenenden,
II. 0,1 bis 5 Gew.-Teile eines Copolymeren, das die nachstehenden Grundbausteine enthält:
a) 0 bis 85 Gew.-% 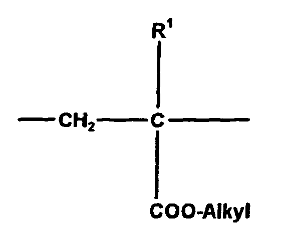
b) 0 bis 80 Gew.-% 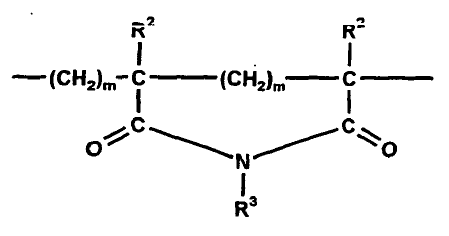
c) 0 bis 15 Gew.-% 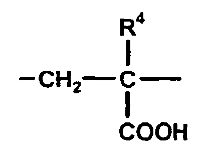
d) 0,8 bis 20 Gew.-% eines Grundbausteins, ausgewählt aus 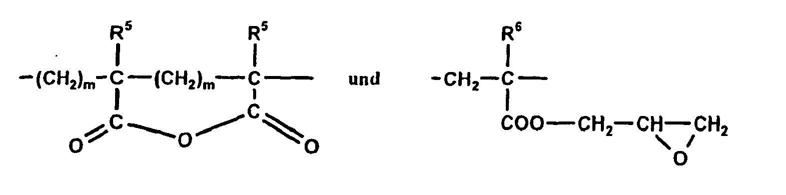
e) 0 bis 95 Gew.-% 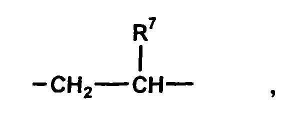
wobei
| | |
|---|---|
| Alkyl = | Methyl, Ethyl, Propyl, Butyl, Pentyl oder Hexyl, |
| R¹ bis R⁷ = | H oder CₙH₂ₙ₊₁ mit n = 1 bis 6 oder Phenyl und |
| m = | 0 oder 1, |
wobei die Summe der Gew.-Teile von I. und II. 100 ergibt.

2. Formmasse gemäß Anspruch 1,
**dadurch gekennzeichnet,**
**dass** das Polyetheramid der Komponente I einen Kristallitschmelzpunkt Tₘ von mindestens 160 °C besitzt.

3. Formmasse gemäß Anspruch 2,
**dadurch gekennzeichnet**
**dass** der Kristallitschmelzpunkt Tₘ mindestens 175 °C beträgt.

4. Formmasse gemäß einem der vorhergehenden Ansprüche,
**dadurch gekennzeichnet,**
**dass** die relative Lösungsviskosität ηᵣₑₗ des Polyetheramids mindestens 1,80 beträgt.

5. Formmasse gemäß Anspruch 4,
**dadurch gekennzeichnet,**
**dass** die relative Lösungsviskosität ηᵣₑₗ des Polyetheramids mindestens 1,85 beträgt.

6. Formmasse gemäß einem der vorhergehenden Ansprüche,
**dadurch gekennzeichnet,**
**dass** die Ruhe-Scherviskosität des Polyetheramids bei 220 °C mindestens 500 Pas beträgt.

7. Formmasse gemäß Anspruch 6,
**dadurch gekennzeichnet,**
**dass** die Ruhe-Scherviskosität des Polyetheramids bei 220 °C mindestens 800 Pas beträgt.

8. Formmasse gemäß einem der vorhergehenden Ansprüche,
**dadurch gekennzeichnet,**
**dass** das zur Herstellung des Polyetheramids verwendete Polyetherdiamin eine zahlenmittlere Molmasse von 230 bis 4000 besitzt

9. Formmasse gemäß einem der vorhergehenden Ansprüche,
**dadurch gekennzeichnet,**
**dass** der von Polyetherdiamin herrührende Anteil des Polyetheramids 5 bis 50 Gew.-% beträgt.

10. Formmasse gemäß einem der vorhergehenden Ansprüche,
**dadurch gekennzeichnet,**
**dass** ihre Ruhe-Scherviskosität bei 220 °C mindestens 2000 Pas beträgt.

11. Formmasse gemäß Anspruch 10,
**dadurch gekennzeichnet,**
**dass** ihre Ruhe-Scherviskosität bei 220 °C mindestens 5000 Pas beträgt.

12. Formmasse gemäß einem der vorhergehenden Ansprüchen,
**dadurch gekennzeichnet,**
**dass** das Copolymere der Komponenten II mindestens
0,1 Gew.-% des Grundbausteins a) und/oder
0,1 Gew.-% des Grundbausteins b) und/oder
0,1 Gew.-% des Grundbausteins e)
enthält.

13. Formmasse gemäß einem der vorhergehenden Ansprüche,
**dadurch gekennzeichnet,**
**dass** sie maximal 50 Gew.-%, bezogen auf die Formmasse, an weiteren Polymeren enthält.

14. Formmasse gemäß einem der vorhergehenden Ansprüche,
**dadurch gekennzeichnet,**
**dass** sie maximal 10 Gew.-%, bezogen auf die Formmasse, an üblichen Zusatzstoffen enthält.

15. Formteil, hergestellt aus der Formmasse gemäß einem der vorhergehenden Ansprüche.

16. Formteil gemäß Anspruch 15, hergestellt durch Extrusion, Coextrusion, Blasformen, 3D-Blasformen, Coextrusionsblasformen, Coextrusions-3D-Blasformen, Coextrusions-Saugblasformen oder Spritzgießen.

17. Formteil gemäß einem der Ansprüche 15 und 16,
**dadurch gekennzeichnet,**
**dass** es ein Monorohr, ein Mehrschichtrohr, ein Profil oder ein Hohlkörper ist.

18. Formteil gemäß einem der Ansprüche 15 bis 17,
**dadurch gekennzeichnet,**
**dass** es eine Unterdruckleitung für Bremskraftverstärker, eine Luftführungsleitung, eine Druckluftleitung, eine Steuerleitung, eine Kühlmittelleitung, eine Kraftstoffleitung, eine Entlüftungsleitung, eine Scheibenwaschanlagenleitung, eine Leitung für hydraulische Kupplungssysteme, eine Servolenkungsleitung, eine Leitung für Klimaanlagen von Kraftfahrzeugen, eine Kabel- oder Adernummantelung, eine Leitung für den Bereich Maschinen- und Apparatebau oder in der Medizintechnik, oder ein spritzgegossenes Teil eines Ölfilters oder Kraftstoffilters ist.

19. Verwendung der Formmasse gemäß einem der Ansprüche 1 bis 14 zur Herstellung von Formteilen mittels Extrusion oder Blasformen.

## Claims

1. A moulding composition which comprises the following components:
I. from 99.9 to 95 parts by weight of a polyetheramide based on a linear aliphatic diamine having from 6 to 12 carbon atoms, on a linear aliphatic or aromatic dicarboxylic acid having from 6 to 12 carbon atoms, and on a polyetherdiamine having at least 3 carbon atoms per ether oxygen atom and having primary amino groups at the ends of the chains,
II. from 0.1 to 5 parts by weight of a copolymer which contains the following underlying entities:
a) from 0 to 85% by weight of 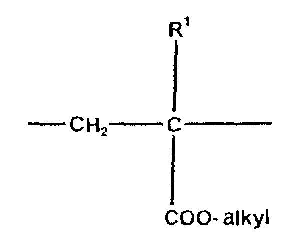
b) from 0 to 80% by weight of 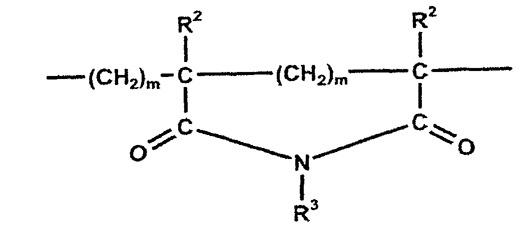
c) from 0 to 15% by weight of 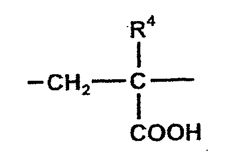
d) from 0.8 to 20% by weight of an underlying entity selected from 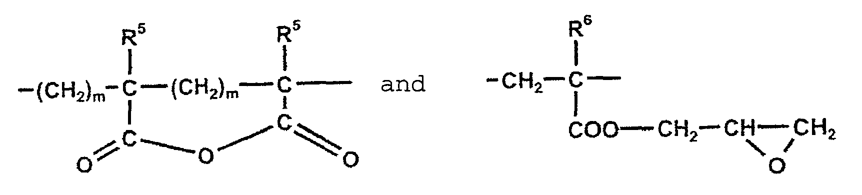
e) from 0 to 95% by weight of 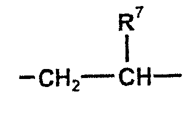
where alkyl is methyl, ethyl, propyl, butyl, pentyl or hexyl,
R¹-R⁷ are H or CₙH₂ₙ₊₁, where n = from 1 to 6, or phenyl, and
m is 0 or 1
where the total of the parts by weight of I. and II. is 100.

2. A moulding composition according to claim 1,
**characterized in that**
the polyetheramide of component I has a crystallite melting point Tₘ of at least 160°C.

3. A moulding composition according to claim 2,
**characterized in that**
the crystallite melting point Tₘ is at least 175°C.

4. A moulding composition according to any one of the preceding claims,
**characterized in that**
the relative solution viscosity ηᵣₑₗ of the polyetheramide is at least 1.80.

5. A moulding composition according to claim 4,
**characterized in that**
the relative solution viscosity ηᵣₑₗ of the polyetheramide is at least 1.85.

6. A moulding composition according to any one of the preceding claims,
**characterized in that**
the zero-shear viscosity of the polyetheramide at 220°C is at least 500 Pas.

7. A moulding composition according to claim 6,
**characterized in that**
the zero-shear viscosity of the polyetheramide at 220°C is at least 800 Pas.

8. A moulding composition according to any one of the preceding claims,
**characterized in that**
the polyetherdiamine used to prepare the polyetheramide has a number-average molecular weight of from 230 to 4000.

9. A moulding composition according to any one of the preceding.claims,
**characterized in that**
the polyetherdiamine-derived proportion of the polyetheramide is from 5 to 50% by weight.

10. A moulding composition according to any one of the preceding claims,
**characterized in that**
the zero-shear viscosity of the same at 220°C is at least 2000 Pas.

11. A moulding composition according to claim 10,
**characterized in that**
the zero-shear viscosity of the same at 220°C is at least 5000 Pas.

12. A moulding composition according to any one of the preceding claims,
**characterized in that**
the copolymer of component II contains at least
0.1% by weight of underlying entity a) and/or
0.1% by weight of underlying entity b) and/or
0.1% by weight of underlying entity e).

13. A moulding composition according to any one of the preceding claims,
**characterized in that**
the same comprises not more than 50% by weight, based on the moulding composition, of other polymers.

14. A moulding composition according to any one of the preceding claims,
**characterized in that**
the same comprises not more than 10% by weight, based on the moulding composition, of conventional additives.

15. A moulding produced from a moulding composition according to any one of the preceding claims.

16. A moulding according to claim 15, produced by extrusion, coextrusion, blow moulding, 3D blow moulding, coextrusion blow moulding, coextrusion 3D blow moulding, coextrusion suction blow moulding, or injection moulding.

17. A moulding according to claim 15 or 16,
**characterized in that**
the same is a monopipe, a multilayer pipe, a profile, or a hollow article.

18. A moulding according to any one of claims 15 to 17,
**characterized in that**
the same is a subatmospheric-pressure line for a brake servo, an air line, a compressed air line, a control line, a coolant line, a fuel line, a ventilation line, a windscreen-wash-system line, a line for hydraulic coupling systems, a servo control line, a line for an air-conditioning system of a motor vehicle, a sheath for a cable or wire, a line for the mechanical engineering or chemical engineering sector or in medical technology, or an injection-moulded part of an oil filter or of a fuel filter.

19. The use of a moulding composition according to any one of claims 1 to 14 for producing mouldings by extrusion or blow moulding.

## Revendications

1. Masse à mouler contenant les composants suivants :
I) 99,9 à 95 parties en poids d'un polyétheramide à base d'une diamine aliphatique linéaire avec 6 à 12 atomes de C, d'un acide dicarboxylique aliphatique ou aromatique linéaire avec 6 à 12 atomes de C et d'une polyétherdiamine avec au moins 3 atomes de C par oxygène d'éther et des groupes amino primaires au niveau des extrémités de chaînes,
II) 0,1 à 5 parties en poids d'un copolymère qui contient les modules de base suivants :
a) 0 à 85 % en poids de 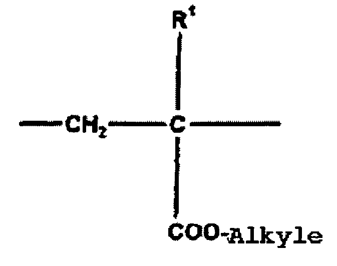
b) 0 à 80 % en poids de 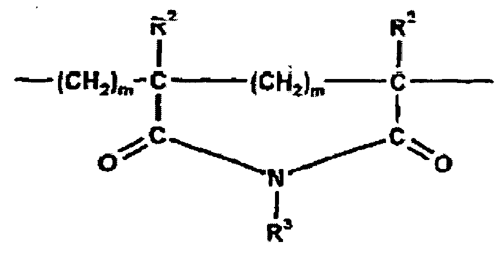
c) 0 à 15 % en poids de 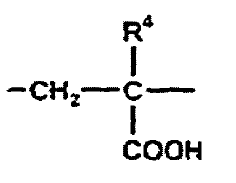
d) 0,8 à 20 % en poids d'un module de base, sélectionné parmi 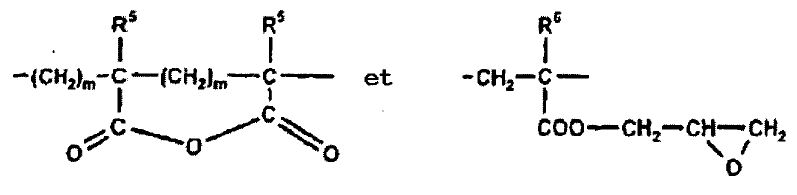
e) 0 à 95 % en poids de 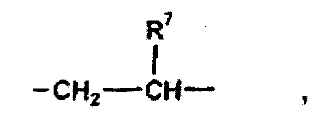
alkyle = méthyle, éthyle, propyle, butyle, pentyle ou hexyle,
R¹ à R⁷ = H ou CₙH₂ₙ₊₁, avec n = 1 à 6 ou phényle et
M = 0 ou 1,
la somme des parties en poids de I. et II. donnant 100.

2. Masse à mouler selon la revendication 1,
**caractérisée en ce que**
le polyétheramide du composant I possède un point de fusion de cristallite Tₘ d'au moins 160°C.

3. Masse à mouler selon la revendication 2,
**caractérisée en ce que**
le point de fusion de cristallite Tₘ est d'au moins 175°C.

4. Masse à mouler selon l'une quelconque des revendications précédentes,
**caractérisée en ce que**
la viscosité en solution relative ηᵣₑₗ du polyétheramide est d'au moins 1,80.

5. Masse à mouler selon la revendication 4,
**caractérisée en ce que**
la viscosité en solution relative ηᵣₑₗ du polyétheramide est d'au moins 1,85.

6. Masse à mouler selon l'une quelconque des revendications précédentes,
**caractérisée en ce que**
la viscosité transversale au repos du polyétheramide est d'au moins 500 Pas à 220°C.

7. Masse à mouler selon la revendication 6,
**caractérisée en ce que**
la viscosité transversale au repos du polyétheramide est d'au moins 800 Pas à 220°C.

8. Masse à mouler selon l'une quelconque des revendications précédentes,
**caractérisée en ce que**
la polyétherdiamine utilisée en vue de la fabrication du polyétheramide possède une masse molaire moyenne en nombre de 230 à 4000.

9. Masse à mouler selon l'une quelconque des revendications précédentes,
**caractérisée en ce que**
la proportion provenant de la polyétherdiamine du polyétheramide est de 5 à 50 % en poids.

10. Masse à mouler selon l'une quelconque des revendications précédentes,
**caractérisée en ce que**
sa viscosité transversale au repos est d'au moins 2000 Pas à 220°C.

11. Masse à mouler selon la revendication 10,
**caractérisée en ce que**
sa viscosité transversale au repos est d'au moins 5000 Pas à 220°C.

12. Masse à mouler selon l'une quelconque des revendications précédentes,
**caractérisée en ce que**
le copolymère des composants II contient au moins
0,1 % en poids du module de base a) et/ ou
0,1 % en poids du module de base b) et/ ou
0,1 % en poids du module de base e).

13. Masse à mouler selon l'une quelconque des revendications précédentes,
**caractérisée en ce qu'**
elle contient au maximum 50 % en poids, par rapport à la masse à mouler, de polymères supplémentaires.

14. Masse à mouler selon l'une quelconque des revendications précédentes,
**caractérisée en ce qu'**
elle contient au maximum 10 % en poids, par rapport à la masse à mouler, d'additifs usuels.

15. Pièce moulée, fabriquée à partir de la masse à mouler selon l'une quelconque des revendications précédentes.

16. Pièce moulée selon la revendication 15, fabriquée par extrusion, co-extrusion, soufflage sur matrice, soufflage sur matrice en 3D, soufflage sur matrice par co-extrusion, soufflage sur matrice en 3D par co-extrusion, soufflage sur matrice par aspiration et co-extrusion ou moulage par injection.

17. Pièce moulée selon l'une quelconque des revendications 15 et 16,
**caractérisée en ce qu'**
elle est un monotube, un tube multicouches, un profilé ou un corps creux.

18. Pièce moulée selon l'une quelconque des revendications 15 à 17,
**caractérisée en ce qu'**
elle est une conduite à dépression pour servofreins, une conduite de guidage d'air, une conduite d'air comprimé, une conduite de commande, une conduite de réfrigérant, une conduite de carburant, une conduite de purge, une conduite d'installation de lavage de vitres, une conduite pour des systèmes d'accouplement hydrauliques, une conduite de direction assistée, une conduite pour climatisations de véhicules automobiles, une enveloppe de câble ou conducteur, une conduite pour le domaine de la construction de machines et d'appareils ou dans la technologie médicale, ou une pièce moulée par injection d'un filtre à huile ou d'un filtre de carburant.

19. Utilisation de la masse moulée selon l'une quelconque des revendications 1 à 14, pour la fabrication de pièces moulées par extrusion ou soufflage sur matrice.
